# EUROPÄISCHE PATENTSCHRIFT

(11) **EP 2 926 157 B1**
(45) Veröffentlichungstag und Bekanntmachung des Hinweises auf die Patenterteilung: **15.11.2017**
(21) Anmeldenummer: 13815386.1
(22) Anmeldetag: 29.11.2013
(51) Int. Cl.: G01S 3/785, H02K 33/18, B60R 16/02, G01J 5/00, G01J 5/10

(54) **MONOLITHISCH AUFGEBAUTE STRAHLUNGSERFASSUNGSEINRICHTUNG**
MONOLITHICALLY CONSTRUCTED RADIATION DETECTION DEVICE
DISPOSITIF DE DÉTECTION DE RAYONNEMENT DE CONCEPTION MONOLITHIQUE

(30) Priorität: 03.12.2012 DE 102012111716
(43) Veröffentlichungstag der Anmeldung: 07.10.2015
(73) Patentinhaber: TRW Automotive Electronics & Components GmbH, 78315 Radolfzell (DE)
(72) Erfinder: BACKES, Ulrich, 78315 Radolfzell (DE)
(74) Vertreter: Prinz & Partner mbB
(86) Internationale Anmeldenummer: PCT/EP2013/075092
(87) Internationale Veröffentlichungsnummer: WO 2014/086678

(56) Entgegenhaltungen:
- EP-A1- 0 774 681
- WO-A2-02/25349
- US-A1- 2003 227 700
- US-A1- 2008 237 349
- US-B1- 6 283 601

## Beschreibung

Die Erfindung betrifft eine Strahlungserfassungseinrichtung, die eine Strahlungsquelle detektiert und zudem die Strahlungsquelle verfolgen kann. Ferner ist ein Sicherheits- und Fahrzeugassistenzsystem vorgesehen, das eine solche Strahlungserfassungseinrichtung umfasst sowie ein Verfahren zur Steuerung einer derartigen Strahlungserfassungseinrichtung.

Strahlungserfassungseinrichtungen sind grundsätzlich aus dem Stand der Technik bekannt. Typischerweise bestehen derartige Strahlungserfassungseinrichtungen aus mehreren Einzelsensoren, die mittels eines aufwendigen Bildverarbeitungsalgorithmus die Position einer Strahlungsquelle ermitteln können. Beispielsweise werden aus einem erfassten Bild alle Lichtquellen bezüglich der Position und Lichtstärke selektiert und lediglich das Maximum extrahiert. Wenn nun mehrere Strahlungsquellen verfolgt werden sollen, so vergrößert dies den Aufwand an Hardware sowie Software. Dadurch erhöhen sich einerseits der Entwicklungsaufwand und andererseits auch die Kosten, um ein derartiges System einsetzen zu können.

Aus der DE 602 04 534 T2 ist eine Hilfsvorrichtung bekannt, die eine Strahlungsempfangseinheit aufweist, die auf einer Platte schwenkbar in einem Gehäuse angeordnet ist. Der Platte ist ein Antrieb zugeordnet, wodurch die Platte samt Strahlungsempfangseinheit relativ zum Gehäuse verschwenkt werden kann.

Die WO 02/25349 A2 zeigt eine Einrichtung, die einen Träger sowie einen schwenkbaren Abschnitt umfasst, auf dem optische Elemente angeordnet werden und mittels eines Akutators verstellt werden können.

In der US 2008/237349 A1 ist ein Barcodescanner beschrieben, der einen Träger mit einem schwenkbaren Abschnitt aufweist, an dem ein Lichtaussendesystem vorgesehen ist. Zudem weist der Barcodescanner eine Empfangseinheit und eine Auswerteeinheit auf.

Aus der EP 0 774 681 A1 ist ein elektromagnetischer Aktuator bekannt, der einen Träger und einen schwenkbaren Abschnitt umfasst, auf dem ein optisches Element angeordnet sein kann.

Es ist daher Aufgabe der Erfindung, den Hardware- und Softwareaufwand zu reduzieren, wodurch sich auch die Kosten entsprechend reduzieren.

Die Aufgabe wird erfindungsgemäß gelöst durch eine Strahlungserfassungseinrichtung, die eine Strahlungsquelle detektiert und eingerichtet ist, die Strahlungsquelle zu verfolgen, wobei die Strahlungserfassungseinrichtung einen Träger mit wenigstens einem schwenkbaren Abschnitt, eine Empfangseinheit, einen Antrieb und eine Auswerte- und Steuereinheit aufweist, wobei die Empfangseinheit auf dem schwenkbaren Abschnitt angeordnet ist, der samt Empfangseinheit um wenigstens eine Achse relativ zu dem Träger schwenkbar ist, wobei die Auswerte- und Steuereinheit mit dem Antrieb und der Empfangseinheit verbunden ist und der Antrieb dem schwenkbaren Abschnitt zugeordnet ist. Der Träger ist zudem mit dem schwenkbaren Abschnitt monolithisch aufgebaut. Zudem richtet die Auswerte- und Steuereinheit die Strahlungserfassungseinrichtung zur Strahlungsquelle aus, sodass die empfangene Strahlungsintensität der Strahlungsquelle maximiert ist.

Der Grundgedanke der Erfindung ist dabei, dass lediglich eine Empfangseinheit pro Strahlungsquelle verwendet wird, wobei diese eine Empfangseinheit der Bewegung der Strahlungsquelle folgen kann, indem der schwenkbare Abschnitt entsprechend der Bewegung der Strahlungsquelle verschwenkt wird. Aufgrund der erfindungsgemäßen Ausgestaltung kann der Hardware- und Softwareaufwand deutlich gesenkt werden, da pro Strahlungsquelle lediglich eine Empfangseinheit verwendet wird. Durch die monolithische Bauweise ist zudem eine extrem kostengünstige und platzsparende Einrichtung geschaffen, da der schwenkbare Abschnitt aus dem Träger herausgearbeitet, insbesondere geätzt, wird, wobei der schwenkbare Bereich mit dem Träger verbunden bleibt.

In einer bevorzugten Ausführungsform ist vorgesehen, dass der Träger ein Chip, insbesondere ein Siliziumchip, ist. Dies bietet den Vorteil, dass die Strahlungserfassungseinrichtung als kompakt ausgeführte Einrichtung hergestellt werden kann.

Insbesondere ist eine Sammellinse vorgesehen, die mit der Empfangseinheit zusammenwirkt. Die Sammellinse bündelt bzw. sammelt die Strahlung, sodass die Empfangseinheit auch intensitätsschwächere Strahlungsquellen detektieren kann und der Erfassungsbereich der Strahlungserfassungseinrichtung vergrößert wird.

Vorzugsweise ist die Empfangseinheit einkanalig ausgeführt, wodurch der Hardware- und Softwareaufwand entsprechend verringert wird.

In einer bevorzugten Ausführungsform ist der Antrieb elektrodynamisch. Damit wird ein zuverlässiger Antrieb bereitgestellt, der den schwenkbaren Abschnitt der Strahlungserfassungseinrichtung verschwenken kann. Durch die Ausführung als Elektroantrieb ist des Weiteren gewährleistet, dass die Strahlungserfassungseinrichtung kompakt ausgeführt ist.

Vorzugsweise ist wenigstens eine Leiterbahn spulenförmig auf dem schwenkbaren Bereich angeordnet. Die Leiterbahn, die für die elektrische Versorgung der Strahlungserfassungseinrichtung vorgesehen sein kann, kann somit als Teil des elektrodynamischen Antriebs verwendet werden, sodass wenig zusätzliche Mittel für den Antrieb bereitgestellt werden müssen. Durch Stromeinspeisung in die Leiterbahn wird aufgrund der spulenförmigen Ausgestaltung ein Magnetfeld erzeugt. Die Leiterbahn fungiert demnach als Antriebsspule.

Insbesondere ist ein Dauermagnet vorgesehen, der dem schwenkbaren Bereich zugeordnet ist, wobei dieser Dauermagnet mit der spulenförmig angeordneten Leiterbahn, also mit der Antriebsspule, zusammenwirkt, sodass der elektrodynamische Antrieb bereitgestellt ist. Somit ist eine kompakte, einfache und kostengünstige Antriebsmöglichkeit für die Strahlungserfassungs-einrichtung bereitgestellt, wobei lediglich der Dauermagnet als zusätzliches Mittel eingebracht werden muss.

In einer alternativen Ausführungsform ist vorgesehen, dass der Antrieb elektrostatisch ist. Ein derartiger elektrostatischer Antrieb kann für Anwendungszwecke von Vorteil sein, in denen lediglich sehr geringe Magnetfelder auftreten dürfen.

In einer bevorzugten Ausführungsform ist die Empfangseinheit eine Photodiode, sodass die Strahlungserfassungseinrichtung auf Strahlungsquellen in Form von Lichtquellen reagiert. Die Photodiode kann dabei an bestimmte Wellenlängenbereiche angepasst werden, sodass die Strahlungserfassungseinrichtung auf entsprechende Lichtquellen anspricht.

In einer weiteren Ausführungsform ist vorgesehen, dass die Empfangseinheit ein Bolometer ist, sodass die Strahlungserfassungseinrichtung zur Erfassung von Wärmestrahlung ausgebildet ist. Dies ist insbesondere von Vorteil, wenn die Strahlungserfassungseinrichtung zur Detektion von Lebewesen oder anderen Wärme abstrahlenden Objekten eingesetzt werden soll.

In einer bevorzugten Ausführungsform ist vorgesehen, dass der schwenkbare Abschnitt um zwei Achsen verstellbar ist, die zueinander senkrecht stehen. Somit ist sichergestellt, dass die Strahlungserfassungseinrichtung einen möglichst großen Detektionsbereich aufweist, der die komplette, vor der Strahlungserfassungseinrichtung liegende Ebene umfasst.

Insbesondere sind zwei Antriebe vorgesehen, die elektrodynamisch und/oder elektrostatisch ausgeführt sind, wobei ein Antrieb für das Schwenken des schwenkbaren Abschnitts um jeweils eine Achse vorgesehen ist. Durch die Ausgestaltung der Strahlungserfassungseinrichtung mit zwei Antrieben ist sichergestellt, dass die um zwei Achsen verstellbare Strahlungserfassungseinrichtung auch nur um eine Achse verstellt werden kann, sofern dies der Bewegung der Strahlungsquelle entspricht.

In einer besonders bevorzugten Ausführungsform ist vorgesehen, dass zwei oder mehr schwenkbare Abschnitte vorgesehen sind, die jeweils eine Empfangseinheit aufweisen. Damit ist sichergestellt, dass eine derartige Strahlungserfassungseinrichtung derart aufgebaut werden kann, dass mehrere Strahlungsquellen jeweils durch eine einzige Strahlungserfassungseinrichtung verfolgt werden können, da pro Strahlungsquelle eine Empfangseinheit vorgesehen ist, wobei diese Empfangseinheit auf einem schwenkbaren Abschnitt angeordnet ist, der entsprechend der Bewegung der zugeordneten Strahlungsquelle verschwenkt werden kann.

Es kann dabei vorgesehen sein, dass der Träger mit mehreren schwenkbaren Abschnitten ausgebildet ist oder dass mehrere Träger unabhängig voneinander ausgebildet werden. Die mehreren Erfassungseinrichtungen können mit einer Auswerte- und Steuereinheit verbunden sein oder es können jeder Erfassungseinrichtung eine Auswerte- und Steuereinheit zugeordnet sein. Die konkrete Ausgestaltung ist an die Bedürfnisse anpassbar.

Ferner ist ein Sicherheits- und Fahrzeugassistenzsystem für ein Kraftfahrzeug mit wenigstens einer Strahlungserfassungseinrichtung nach der zuvor beschriebenen Art vorgesehen, wobei das Sicherheits- und Fahrzeugassistenzsystem ausgehend von den empfangenen Signalen der Strahlungserfassungseinrichtung arbeitet.

In der bevorzugten Ausführungsform ist vorgesehen, dass die Strahlungserfassungseinrichtung die Position eines Körperteils eines Fahrzeuginsassen detektiert, insbesondere die Position eines Kopfes. Somit kann beispielsweise der Airbag entsprechend der Kopfposition eines Fahrzeuginsassen ausgelöst werden, wobei die Aufblasgeschwindigkeit bzw. das Aufblasvolumen des Airbags entsprechend gesteuert werden kann. Alternativ kann durch die Position des Kopfes auch ein Aufmerksamkeitsassistent gesteuert werden, der dann reagiert, wenn der Kopf eine für einen Fahrzeugführer untypische Haltung annimmt. Ferner kann die Strahlungserfassungseinrichtung die Hand eines Fahrzeuginsassen als Wärmestrahlungsquelle detektieren, sodass mittels der Strahlungserfassungseinrichtung eine Gestensteuerung der Bordelektronik möglich ist.

In einer alternativen Ausführungsform des Sicherheits- und Fahrzeugassistenzsystems ist vorgesehen, dass die Strahlungserfassungseinrichtung die Position von Strahlungsquellen von entgegenkommenden und/oder vorausfahrenden Fahrzeugen und/oder Lebewesen detektiert. Somit kann beispielsweise ein Fernlichtassistenzsystem ein entgegenkommendes Fahrzeug aufgrund der Scheinwerfer erkennen und entsprechend abblenden, oder die Strahlungserfassungseinrichtung erfasst die Position der Rückleuchten eines vorausfahrenden Fahrzeugs, wobei der Abstand zu diesem Fahrzeug entsprechend geregelt wird. Ferner kann vorgesehen sein, dass die Strahlungserfassungseinrichtung Wärmestrahlung detektiert, sodass Lebewesen erkannt werden können, die sich beispielsweise bei Dunkelheit am Straßenrand oder auf der Straße befinden.

Ferner ist ein Verfahren zur Steuerung einer Strahlungserfassungseinrichtung der zuvor beschriebenen Art vorgesehen, das die Schritte umfasst:
a) Auswerten der von der Empfangseinheit empfangenen Strahlungsintensität einer Strahlungsquelle durch die Auswerte- und Steuereinheit,
b) Auswerten des Winkeleinfalls der von der Strahlungsquelle ausgesandten Strahlung durch die Auswerte- und Steuereinheit,
c) Schwenken des schwenkbaren Abschnitts um wenigstens eine Achse durch Steuern eines Antriebs mittels Strombeaufschlagung durch die Auswerte- und Steuereinheit, wobei die Auswerte- und Steuereinheit die Strahlungserfassungseinrichtung zur Strahlungsquelle ausrichtet, sodass die Strahlungsintensität maximiert ist, wodurch die Strahlungserfassungseinrichtung die Strahlungsquelle verfolgt,
wobei sich die Schritte a) bis c) iterativ beliebig oft wiederholen können. Mit diesem Verfahren ist sichergestellt, dass die Strahlungsempfangseinrichtung, insbesondere die Empfangseinheit, die auf dem schwenkbaren Abschnitt angeordnet ist, der Position der Strahlungsquelle folgen kann. Dabei wird der schwenkbare Abschnitt durch den Antrieb derart angetrieben, dass sich die Intensität der in der Empfangseinheit empfangenen Strahlung erhöht.

In einer bevorzugten Ausführungsform ist vorgesehen, dass die Auswerte- und Steuereinheit mehreren Empfangseinheiten zugeordnet sein kann, wodurch sich die Kompaktheit weiter erhöht, da lediglich eine Auswerte- und Steuereinheit für mehrere Empfangseinheiten vorgesehen ist. Die Auswerte- und Steuereinheit kann entsprechend dem zuvor beschriebenen Verfahren auch mehrere dieser Empfangseinheiten entsprechend steuern.

Als Strahlungsquelle im Sinne der Erfindung ist auch eine passive Strahlungsquelle anzusehen, das heißt, dass auch ein Objekt, das angestrahlt wird und die Strahlung reflektiert, eine Strahlungsquelle im Sinne der Erfindung darstellt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Strahlungserfassungseinrichtung, die um eine Achse verschwenkbar ist,
- Figur 2 eine Strahlungserfassungseinrichtung, die um zwei Achsen verschwenkbar ist,
- Figur 3 eine schematische Darstellung der Steuerung der Strahlungserfassungseinrichtung, und
- Figur 4 eine schematische Darstellung der Steuerung mehrerer Strahlungserfassungseinrichtungen durch eine Auswerte- und Steuereinheit.

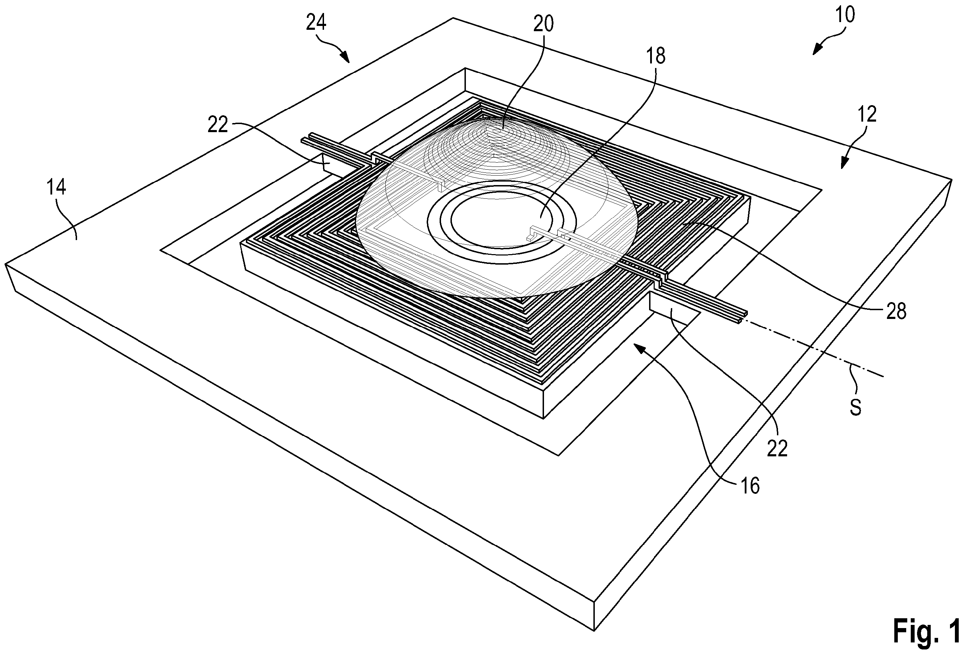

Figur 1 zeigt eine erfindungsgemäße Strahlungserfassungseinrichtung 10, die einen Träger 12 aufweist, der aus einem rahmenförmigen Element 14 und einem schwenkbaren Abschnitt 16 besteht.

Auf dem schwenkbaren Abschnitt 16 ist eine Empfangseinheit 18 angeordnet, die zur Detektion von Strahlung dient. Der auf dem schwenkbaren Abschnitt 16 angeordneten Empfangseinheit 18 ist eine Sammellinse 20 zugeordnet, sodass der Detektionsbereich der Empfangseinheit 18 vergrößert wird. Die Empfangseinheit 18 ist vorzugsweise im Fokus der Sammellinse 20 angeordnet.

Der schwenkbare Abschnitt 16 ist in der gezeigten Ausführungsform um eine Schwenkachse S verschwenkbar. Diese Schwenkachse S wird durch Stege 22 definiert, die den schwenkbaren Abschnitt 16 mit dem Träger 12 verbinden. Der schwenkbare Abschnitt 16 kann dabei aus dem Träger 12 ausgefräst sein, wobei es sich bei dem Träger um eine ausgefräste Leiterplatte, insbesondere einen Chip, handeln kann.

Zum Verschwenken des schwenkbaren Abschnitts 16 ist ein Antrieb 24 nötig, der nur teilweise dargestellt ist. Der in dieser Ausführungsform gezeigte Antrieb 24 ist ein elektrodynamischer Antrieb 24, der unter anderem aus einem hier nicht dargestellten Dauermagneten 26 ausgebildet ist, welcher dem schwenkbaren Abschnitt 16 zugeordnet ist. Als weiteres Element des elektrodynamischen Antriebs 24 ist wenigstens eine Leiterbahn 28 spulenförmig auf dem schwenkbaren Abschnitt 16 angeordnet, sodass die Leiterbahn 28 eine Antriebsspule des Antriebs 24 bildet. Durch Bestromung der Leiterbahn 28 kann sich der schwenkbare Abschnitt 16 aufgrund der Wechselwirkung mit dem Dauermagneten 26 um die aus den Stegen 22 gebildete Schwenkachse S verschwenken.

Somit kann der schwenkbare Abschnitt 16 mit der darauf angeordneten Empfangseinheit 18 um bis zu 20° relativ zu dem Träger 12 verschwenkt werden, womit ein entsprechend großer Erfassungsbereich abgedeckt ist.

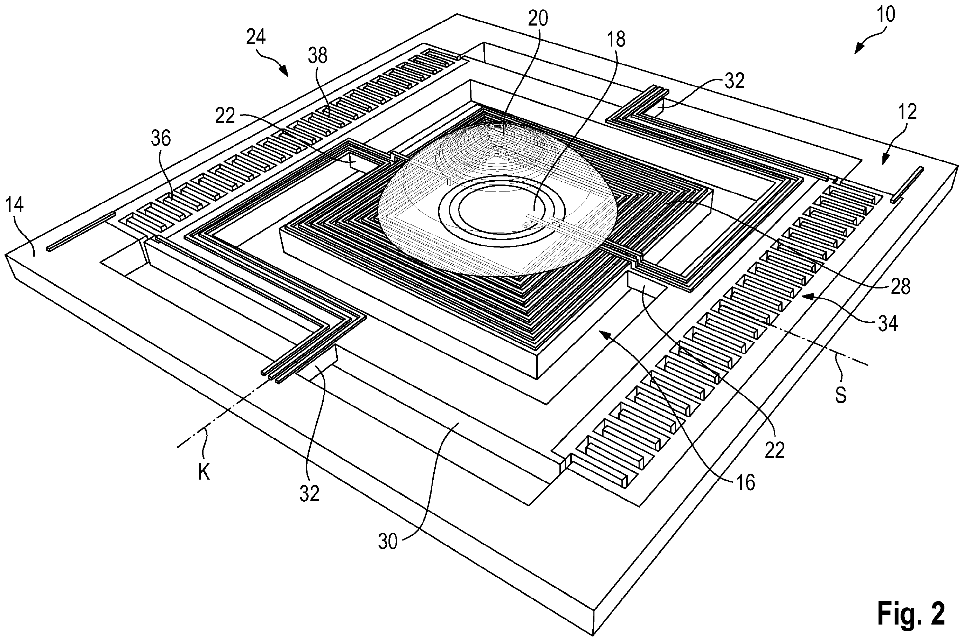

Figur 2 zeigt eine weitere Ausführungsform der erfindungsgemäßen Strahlungserfassungseinrichtung 10, wobei der schwenkbare Abschnitt 16 um zwei Achsen verschwenkbar ist. Dazu weist die Strahlungserfassungseinrichtung 10 einen Träger 12 auf, der im Vergleich zu dem zuvor beschriebenen Träger 12 neben dem rahmenförmigen Element 14 und dem schwenkbaren Abschnitt 16 einen weiteren Kippbereich 30 aufweist. Der Kippbereich 30 ist um eine Kippachse K verkippbar. Der Träger 12 dieser Ausführungsform ist dabei so angeordnet, dass das rahmenförmige Element 14 den Kippbereich 30 umschließt, wobei der Kippbereich 30 mit dem rahmenförmigen Element 14 über Kippstege 32 verbunden ist. Der schwenkbare Abschnitt 16, der in der Mitte des Trägers 12 angeordnet ist, ist mit den Schwenkstegen 22 am Kippbereich 30 angeordnet. Die durch die Schwenkstege 22 und die Kippstege 32 gebildeten Schwenk- und Kippachsen S, K stehen senkrecht zueinander.

Dem schwenkbaren Abschnitt 16 sind wie in der zuvor gezeigten Ausführungsform wieder die Empfangseinheit 18 und die Sammellinse 20 zugeordnet. Zudem ist die Leiterbahn 28 wiederum spulenförmig auf dem schwenkbaren Abschnitt 16 angeordnet, sodass sie die Antriebsspule des Antriebs 24 bildet. Der Dauermagnet 26, der dem schwenkbaren Abschnitt 16 zugeordnet ist, ist nicht gezeigt. Der Antrieb 24 für den schwenkbaren Abschnitt 16 ist in der gezeigten Ausführungsform demnach elektrodynamisch ausgeführt.

Dem Kippbereich 30 ist ein elektrostatischer Antrieb 34 zugeordnet. Der elektrostatische Antrieb 34 weist eine Kammstruktur auf, wobei an dem rahmenförmigen Element 14 eine Kammstruktur 36 und an dem Kippbereich 30 eine entgegengesetzte Kammstruktur 38 ausgebildet ist, wobei die Kammstrukturen 36, 38 ineinander greifen und so den elektrostatischen Antrieb 34 bilden. Durch Bestromung des elektrostatischen Antriebs 34 verkippt der Kippbereich 30 um die Kippachse K, die durch die Kippstege 32 gebildet ist. Bei dem Verkippen des Kippbereichs 30 wird der schwenkbare Abschnitt 16 ebenfalls um die Kippachse K verkippt.

Somit ist es möglich, dass der schwenkbare Abschnitt 16 um die Kippachse K gekippt werden kann, wenn der Kippbereich 30 von dem elektrostatischen Antrieb 34 entsprechend verkippt wird, und um die Schwenkachse S verschwenkt werden kann, wenn die spulenförmig angeordnete Leiterbahn 28 entsprechend bestromt wird. Die Empfangseinheit 18, die auf dem schwenkbaren Abschnitt 16 angeordnet ist, ist somit um zwei Achsen K, S verstellbar, wodurch der Strahlungserfassungseinrichtung 10 ein entsprechend großer Erfassungsbereich zugeordnet ist. Da die Kippachse K und die Schwenkachse S senkrecht zueinander stehen, kann die Strahlungserfassungseinrichtung 10 im Wesentlichen die gesamte vor ihr liegende Ebene abdecken. Der schwenkbare Abschnitt 16 ist sowohl um die Kippachse K als auch die Schwenkachse S um jeweils bis zu 20° verstellbar.

Der Träger 12, der aus dem schwenkbaren Abschnitt 16, dem rahmenförmigen Element 14 und dem Kippbereich 30 besteht, kann monolithisch aufgebaut sein, wobei die entsprechenden Kippstege 32 und Schwenkstege 22 durch Ausfräsen ausgebildet werden. Es kann sich dabei bei dem Träger 12 um eine Leiterplatte bzw. einen Chip handeln.

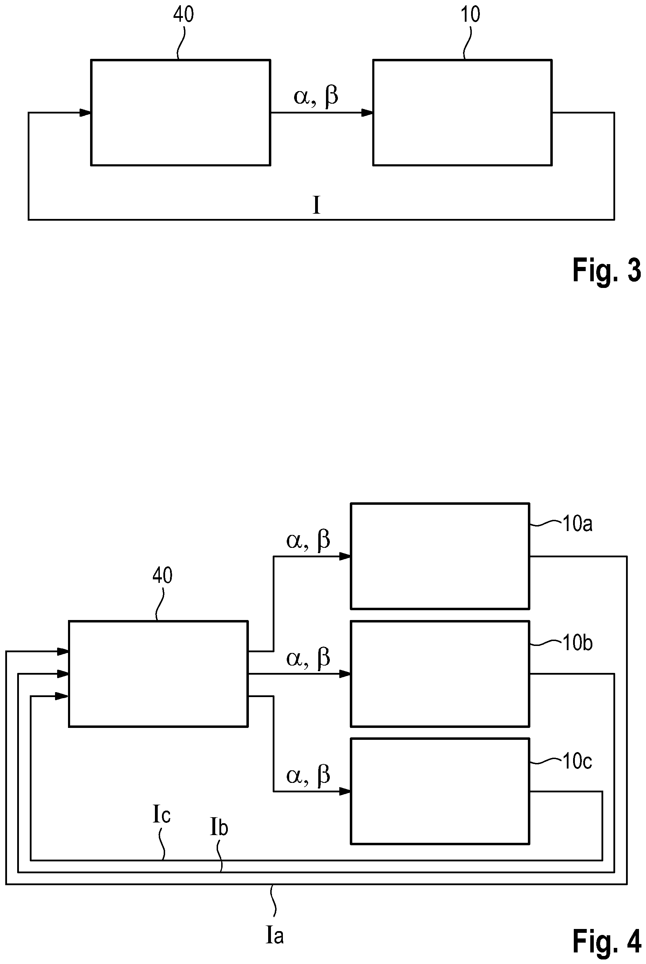

Die Steuerung und das Auswerten der Strahlungserfassungseinrichtung 10 sind schematisch in Figur 3 gezeigt. Es ist eine Auswerte- und Steuereinheit 40 vorgesehen, die die Strahlungserfassungseinrichtung 10, insbesondere die Antriebe 24 und 34, derart steuert, dass die Empfangseinheit 18 eine möglichst große Strahlungsintensität I erfasst. Die Auswerte- und Steuereinheit 40 bestromt dabei unabhängig voneinander den Antrieb 24 und den Antrieb 34, sodass der schwenkbare Abschnitt 16 der Strahlungserfassungseinrichtung 10 um einen Horizontalwinkel α und einen Vertikalwinkel β unabhängig voneinander verstellt werden kann.

Das Ziel der Auswerte- und Steuereinheit 40 ist es, die Strahlungserfassungseinrichtung 10 und insbesondere die Empfangseinheit 18 zur Strahlungsquelle auszurichten, wodurch die Strahlungsintensität I maximiert wird. Die Antriebe 24, 34 werden dabei zunächst iterativ von der Auswerte- und Steuereinheit 40 bestromt, wobei die daraus resultierende Strahlungsintensität I gemessen wird. Da die Antriebe 24, 34 als elektrisch Antriebe 24, 34 ausgeführt sind, ist es möglich, den schwenkbaren Bereich 16 mit einer hohen Frequenz zu verstellen. Damit ist gewährleistet, dass die Strahlungserfassungseinrichtung 10 sich schnell derart ausrichten kann, dass die empfangene Intensität I maximiert wird, wodurch der Bewegung der Strahlungsquelle gefolgt werden kann.

Die Auswerte- und Steuereinheit 40 kann zudem einen intelligenten Algorithmus und einen Speicher aufweisen, sodass die letzten Ansteuerungen gespeichert werden. Der schwenkbare Abschnitt 16 wird daraufhin in einem ersten Schritt entsprechend einer extrapolierten Bewegung der Strahlungsquelle verstellt.

Die Auswerte- und Steuereinheit 40 empfängt von der Strahlungserfassungseinrichtung 10 lediglich ein Stromsignal, das proportional zu der Strahlungsintensität I ist, die die Empfangseinheit 18 empfangen hat. Demnach kann die Empfangseinheit 18 einkanalig aufgebaut sein, da sie lediglich ein Stromsignal aussendet, welches von der Auswerte- und Steuereinheit 40 ausgewertet wird.

Ferner ist es denkbar, dass die Auswerte- und Steuereinheit 40 mehreren Strahlungserfassungseinrichtungen 10 zugeordnet ist und diese entsprechend steuert und auswertet. In der Auswerte- und Steuereinheit 40 ist dazu ein intelligenter Algorithmus hinterlegt, der die Strahlungserfassungseinrichtung 10a bis 10c unabhängig voneinander steuert und die empfangenen Strahlungsintensitäten Ia bis Ic entsprechend den Strahlungserfassungseinrichtungen 10a bis 10c zuordnet.

Generell ist es damit möglich, beispielsweise Lichtquellen bzw. Wärmequellen zu detektieren. So kann beispielsweise die erfindungsgemäße Strahlungserfassungseinrichtung 10 für ein Sicherheits- und Fahrzeugassistenzsystem eines Kraftfahrzeugs verwendet werden, wobei die Empfangseinheit 18 eine Photodiode ist, die vorausfahrende Kraftfahrzeuge anhand der Rückleuchten detektiert und den Abstand zu dem vorausfahrenden Fahrzeug regelt. Alternativ kann die erfindungsgemäße Strahlungserfassungseinrichtung 10 in einem Fahrzeugassistenzsystem wie einem Fernlichtassistenzsystem verwendet werden, wobei das Licht entgegenkommender Fahrzeuge detektiert wird.

In einer weiteren Alternative kann die erfindungsgemäße Strahlungserfassungseinrichtung 10 auch für den Innenraum eines Kraftfahrzeugs verwendet werden, wobei die Empfangseinheit 18 ein Bolometer ist, das auf Wärmestrahlung reagiert. Demnach kann die Strahlungserfassungseinrichtung 10 die Position beispielsweise eines Kopfes registrieren und aufgrund dessen entsprechende Sicherheits- und Fahrzeugassistenzsysteme steuern. Ein solches Sicherheitsassistenzsystem kann beispielsweise ein Aufmerksamkeitsassistent sein. Ferner kann die Auslösecharakteristik eines Airbags entsprechend der Kopfposition gesteuert werden.

Alternativ ist auch eine Gestenerkennung und daraus resultierende Steuerung der Bordelektronik durch ein Fahrzeugassistenzsystem mit einer derartigen Strahlungserfassungseinrichtung 10 möglich. Dazu registriert die Empfangseinheit 18 beispielweise die Position einer Hand.

Insbesondere ist es denkbar, eine Auswerte- und Steuereinheit 40 zu verwenden, die mehreren Strahlungserfassungseinrichtungen 10 zugeordnet ist, wobei jede Strahlungserfassungseinrichtung 10 mehrere schwenkbare Abschnitte 16 mit Empfangseinheiten 18 aufweist.

Beispielsweise können zwei erfindungsgemäße Strahlungserfassungseinrichtungen 10 vorgesehen sein, wobei eine der beiden Strahlungserfassungseinrichtungen 10 dem Innenraum eines Fahrzeugs und die andere der Umgebung des Fahrzeugs zugeordnet ist. Die der Umgebung zugeordnete Strahlungserfassungseinrichtung 10 kann darüber hinaus mehrere schwenkbare Abschnitte 16 mit Empfangseinheiten 18 aufweisen, wobei eine Empfangseinheit 18 für einen Fernlichtassistenzsystem und eine weitere für ein Personenerkennungssystem vorgesehen sein kann.

Es wird deutlich, dass mit der erfindungsgemäßen Strahlungserfassungseinrichtung 10 sowie den damit ausgestatteten Fahrzeugassistenzsystemen vielfältige Möglichkeiten der Anwendung zur Verfügung stehen.

## Patentansprüche

1. Strahlungserfassungseinrichtung (10), die eine Strahlungsquelle detektiert und eingerichtet ist, die Strahlungsquelle zu verfolgen, mit einem Träger (12), der wenigstens einen schwenkbaren Abschnitt (16) aufweist, einer Empfangseinheit (18), einem Antrieb (24) und einer Auswerte- und Steuereinheit (40), wobei die Empfangseinheit (18) auf dem schwenkbaren Abschnitt (16) angeordnet ist, der samt Empfangseinheit (18) um wenigstens eine Achse (S) relativ zu dem Träger (12) schwenkbar ist, wobei die Auswerte- und Steuereinheit (40) mit dem Antrieb (24) und der Empfangseinheit (18) verbunden ist und der Antrieb (24) dem schwenkbaren Abschnitt (16) zugeordnet ist, wobei der Träger (12) mit dem schwenkbaren Abschnitt (16) monolithisch aufgebaut ist, **dadurch gekennzeichnet, dass** die Auswerte- und Steuereinheit (40) die Strahlungserfassungseinrichtung (10) zur Strahlungsquelle ausrichtet, sodass die empfangene Strahlungsintensität (I) der Strahlungsquelle maximiert ist.

2. Strahlungserfassungseinrichtung (10) nach Anspruch 1, **dadurch gekennzeichnet, dass** der Träger (12) ein Chip ist, insbesondere ein Siliziumchip.

3. Strahlungserfassungseinrichtung (10) nach einem der vorhergehenden Ansprüche, **dadurch gekennzeichnet, dass** eine Sammellinse (20) vorgesehen ist, die mit der Empfangseinheit (18) zusammenwirkt.

4. Strahlungserfassungseinrichtung (10) nach einem der vorhergehenden Ansprüche, **dadurch gekennzeichnet, dass** die Empfangseinheit (18) einkanalig ist.

5. Strahlungserfassungseinrichtung (10) nach einem der vorhergehenden Ansprüche, **dadurch gekennzeichnet, dass** der Antrieb (24) elektrodynamisch ist.

6. Strahlungserfassungseinrichtung (10) nach einem der vorhergehenden Ansprüche, **dadurch gekennzeichnet, dass** wenigstens eine Leiterbahn (28) spulenförmig auf dem schwenkbaren Bereich (16) angeordnet ist.

7. Strahlungserfassungseinrichtung (10) nach einem der vorhergehenden Ansprüche, **dadurch gekennzeichnet, dass** ein dem schwenkbaren Bereich (16) zugeordneter Dauermagnet (26) vorgesehen ist.

8. Strahlungserfassungseinrichtung (10) nach einem der Ansprüche 1 bis 4, **dadurch gekennzeichnet, dass** der Antrieb (24) elektrostatisch ist.

9. Strahlungserfassungseinrichtung (10) nach einem der vorhergehenden Ansprüche, **dadurch gekennzeichnet, dass** die Empfangseinheit (18) eine Photodiode ist.

10. Strahlungserfassungseinrichtung (10) nach einem der vorhergehenden Ansprüche, **dadurch gekennzeichnet, dass** die Empfangseinheit (18) ein Bolometer ist.

11. Strahlungserfassungseinrichtung (10) nach einem der vorhergehenden Ansprüche, **dadurch gekennzeichnet, dass** der schwenkbare Abschnitt (16) um zwei Achsen (S, K) verstellbar ist, die zueinander senkrecht stehen.

12. Strahlungserfassungseinrichtung (10) nach Anspruch 11, **dadurch gekennzeichnet, dass** zwei Antriebe (24, 34) vorgesehen sind, die elektrodynamisch und/oder elektrostatisch ausgeführt sind, wobei ein Antrieb (24, 34) für das Schwenken des schwenkbaren Abschnitts (16) um jeweils eine Achse (S, K) vorgesehen ist.

13. Strahlungserfassungseinrichtung (10) nach einem der vorhergehenden Ansprüche, **dadurch gekennzeichnet, dass** zwei oder mehr schwenkbare Abschnitte (16) vorgesehen sind, die jeweils eine Empfangseinheit (18) aufweisen.

14. Sicherheits- und Fahrzeugassistenzsystem für ein Kraftfahrzeug mit wenigstens einer Strahlungserfassungseinrichtung (10) nach einem der vorhergehenden Ansprüche.

15. Sicherheits- und Fahrzeugassistenzsystem nach Anspruch 14, **dadurch gekennzeichnet, dass** die Strahlungserfassungseinrichtung (10) die Position eines Körperteils eines Fahrzeuginsassen detektiert, insbesondere die Position eines Kopfes.

16. Sicherheits- und Fahrzeugassistenzsystem nach Anspruch 14, **dadurch gekennzeichnet, dass** die Strahlungserfassungseinrichtung (10) die Position von Strahlungsquellen von entgegenkommenden und/oder vorausfahrenden Fahrzeugen und/oder Lebewesen detektiert.

17. Verfahren zur Steuerung einer Strahlungserfassungseinrichtung (10) nach einem der Ansprüche 1 bis 13, mit den Schritten:
a) Auswerten der von der Empfangseinheit (18) empfangenen Strahlungsintensität (I) einer Strahlungsquelle durch die Auswerte- und Steuereinheit (40),
b) Auswerten des Winkeleinfalls der von der Strahlungsquelle ausgesandten Strahlung durch die Auswerte- und Steuereinheit (40),
c) Schwenken des schwenkbaren Abschnitts (16) um wenigstens eine Achse (S, K) durch Steuern eines Antriebs (24, 34) mittels Strombeaufschlagung durch die Auswerte- und Steuereinheit (40), **dadurch gekennzeichnet, dass** die Auswerte- und Steuereinheit (40) die Strahlungserfassungseinrichtung (10) zur Strahlungsquelle ausrichtet, sodass die Strahlungsintensität maximiert ist, wodurch die Strahlungserfassungseinrichtung (10) die Strahlungsquelle verfolgt,
wobei sich die Schritte a) bis c) iterativ beliebig oft wiederholen können.

18. Verfahren nach Anspruch 17, **dadurch gekennzeichnet, dass** die Auswerte- und Steuereinheit (40) mehreren Empfangseinheiten (18) zugeordnet sein kann.

## Claims

1. A radiation detection means (10) which detects a radiation source and is configured to track the radiation source, comprising a carrier (12) which includes at least one pivotable portion (16), a receiving unit (18), a drive (24) and an evaluation and control unit (40), wherein the receiving unit (18) is arranged on the pivotable portion (16) which together with the receiving unit (18) is pivotable about at least one axis (S) relative to the carrier (12), wherein the evaluation and control unit (40) is connected with the drive (24) and the receiving unit (18), and the drive (24) is assigned to the pivotable portion (16), the carrier (12) being constructed monolithically with the pivotable portion (16), **characterized in that** the evaluation and control unit (40) aligns the radiation detection means (10) relative to the radiation source, so that the received radiation intensity (I) of the radiation source is maximized.

2. The radiation detection means (10) according to claim 1, **characterized in that** the carrier (12) is a chip, in particular a silicon chip.

3. The radiation detection means (10) according to either of the preceding claims, **characterized in that** a collecting lens (20) is provided, which cooperates with the receiving unit (18).

4. The radiation detection means (10) according to any of the preceding claims, **characterized in that** the receiving unit (18) is of the single-channel type.

5. The radiation detection means (10) according to any of the preceding claims, **characterized in that** the drive (24) is of the electrodynamic type.

6. The radiation detection means (10) according to any of the preceding claims, **characterized in that** at least one conductor path (28) is arranged on the pivotable region (16) in a coil-shaped manner.

7. The radiation detection means (10) according to any of the preceding claims, **characterized in that** a permanent magnet (26) is provided which is assigned to the pivotable region (16).

8. The radiation detection means (10) according to any of claims 1 to 4, **characterized in that** the drive (24) is of the electrostatic type.

9. The radiation detection means (10) according to any of the preceding claims, **characterized in that** the receiving unit (18) is a photodiode.

10. The radiation detection means (10) according to any of the preceding claims, **characterized in that** the receiving unit (18) is a bolometer.

11. The radiation detection means (10) according to any of the preceding claims, **characterized in that** the pivotable portion (16) is adjustable about two axes (S, K) which are perpendicular to each other.

12. The radiation detection means (10) according to claim 11, **characterized in that** two drives (24, 34) are provided, which are of the electrodynamic and/or electrostatic type, wherein one drive (24, 34) is provided for pivoting the pivotable portion (16) about one respective axis (S, K).

13. The radiation detection means (10) according to any of the preceding claims, **characterized in that** two or more pivotable portions (16) are provided, which each include a receiving unit (18).

14. A safety and vehicle assistance system for a motor vehicle, comprising at least one radiation detection means (10) according to any of the preceding claims.

15. The safety and vehicle assistance system according to claim 14, **characterized in that** the radiation detection means (10) detects the position of a body part of a vehicle occupant, in particular the position of a head.

16. The safety and vehicle assistance system according to claim 14, **characterized in that** the radiation detection means (10) detects the position of radiation sources of oncoming and/or preceding vehicles and/or living beings.

17. A method for controlling a radiation detection means (10) according to any of claims 1 to 13, comprising the steps of:
a) evaluating, by the evaluation and control unit (40), the radiation intensity (I) of a radiation source received by the receiving unit (18);
b) evaluating, by the evaluation and control unit (40), the angular incidence of the radiation emitted by the radiation source;
c) pivoting the pivotable portion (16) about at least one axis (S, K) by controlling a drive (24, 34) by means of energization by the evaluation and control unit (40),
**characterized in that**
the evaluation and control unit (40) aligns the radiation detection means (10) relative to the radiation source, so that the radiation intensity is maximized, whereby the radiation detection means (10) tracks the radiation source,
wherein steps a) to c) can repeat themselves iteratively any number of times.

18. The method according to claim 17, **characterized in that** the evaluation and control unit (40) can be assigned to a plurality of receiving units (18).

## Revendications

1. Moyen de détection de rayonnement (10) qui détecte une source de rayonnement et qui est réalisé de manière à poursuivre la source de rayonnement, comportant un support (12) qui présente au moins un tronçon pivotant (16), une unité de réception (18), un entraînement (24) et une unité d'évaluation et de commande (40), l'unité de réception (18) étant agencée sur le tronçon pivotant (16) lequel est apte à pivoter ensemble avec l'unité de réception (18) autour d'au moins un axe (S) par rapport au support (12), l'unité d'évaluation et de commande (40) étant reliée à l'entraînement (24) et à l'unité de réception (18), et l'entraînement (24) étant associé au tronçon pivotant (16), le support (12) présentant ensemble avec le tronçon pivotant (16) une structure monolithique, **caractérisé en ce que** l'unité d'évaluation et de commande (40) oriente le moyen de détection de rayonnement (10) par rapport à la source de rayonnement de sorte que l'intensité (I) du rayonnement de la source de rayonnement reçue est maximalisée.

2. Moyen de détection de rayonnement (10) selon la revendication 1, **caractérisé en ce que** le support (12) est une puce, en particulier une puce en silicium.

3. Moyen de détection de rayonnement (10) selon l'une des revendications précédentes, **caractérisé en ce qu'**il est prévu une lentille convergente (20) qui coopère avec l'unité de réception (18).

4. Moyen de détection de rayonnement (10) selon l'une des revendications précédentes, **caractérisé en ce que** l'unité de réception (18) est du type à un canal.

5. Moyen de détection de rayonnement (10) selon l'une des revendications précédentes, **caractérisé en ce que** l'entraînement (24) est du type électrodynamique.

6. Moyen de détection de rayonnement (10) selon l'une des revendications précédentes, **caractérisé en ce qu'**au moins une piste conductrice (28) est agencée en forme de bobine sur la zone pivotante (16).

7. Moyen de détection de rayonnement (10) selon l'une des revendications précédentes, **caractérisé en ce qu'**il est prévu un aimant permanent (26) qui est associé à la zone pivotante (16).

8. Moyen de détection de rayonnement (10) selon l'une des revendications 1 à 4, **caractérisé en ce que** l'entraînement (24) est du type électrostatique.

9. Moyen de détection de rayonnement (10) selon l'une des revendications précédentes, **caractérisé en ce que** l'unité de réception (18) est une photodiode.

10. Moyen de détection de rayonnement (10) selon l'une des revendications précédentes, **caractérisé en ce que** l'unité de réception (18) est un bolomètre.

11. Moyen de détection de rayonnement (10) selon l'une des revendications précédentes, **caractérisé en ce que** le tronçon pivotant (16) est ajustable autour de deux axes (S, K) qui sont perpendiculaires l'un par rapport à l'autre.

12. Moyen de détection de rayonnement (10) selon la revendication 11, **caractérisé en ce qu'**il est prévu deux entraînements (24, 34) qui sont du type électrodynamique et/ou électrostatique, un entraînement (24, 34) étant prévu pour le pivotement du tronçon pivotant (16) autour d'un axe (S, K) respectif.

13. Moyen de détection de rayonnement (10) selon l'une des revendications précédentes, **caractérisé en ce qu'**il est prévu deux tronçons pivotants (16) ou plus qui présentent chacun une unité de réception (18).

14. Système de sécurité et d'assistance de véhicule pour véhicule automobile, comportant au moins un moyen de détection de rayonnement (10) selon l'une des revendications précédentes.

15. Système de sécurité et d'assistance de véhicule selon la revendication 14, **caractérisé en ce que** le moyen de détection de rayonnement (10) détecte la position d'une partie du corps d'un passager du véhicule, en particulier la position d'une tête.

16. Système de sécurité et d'assistance de véhicule selon la revendication 14, **caractérisé en ce que** le moyen de détection de rayonnement (10) détecte la position de sources de rayonnement de véhicules et/ou d'organismes vivants arrivant en sens inverse et/ou qui précèdent.

17. Procédé de commande d'un moyen de détection de rayonnement (10) selon l'une des revendications 1 à 13, comprenant les étapes suivantes :
a) l'évaluation de l'intensité (I) du rayonnement d'une source de rayonnement reçue par l'unité de réception (18) au moyen de l'unité d'évaluation et de commande (40),
b) l'évaluation de l'incidence angulaire du rayonnement émis par la source de rayonnement au moyen de l'unité d'évaluation et de commande (40),
c) le pivotement du tronçon pivotant (16) autour d'au moins un axe (S, K) en commandant un entraînement (24, 34) par alimentation en courant au moyen de l'unité d'évaluation et de commande (40),
**caractérisé en ce que**
l'unité d'évaluation et de commande (40) oriente le moyen de détection de rayonnement (10) par rapport à la source de rayonnement de sorte que l'intensité du rayonnement est maximalisée, grâce à quoi le moyen de détection de rayonnement (10) poursuit la source de rayonnement,
les étapes a) à c) pouvant se répétées par itération un nombre quelconque de fois.

18. Procédé selon la revendication 17, **caractérisé en ce que** l'unité d'évaluation et de commande (40) peut être associée à plusieurs unités de réception (18).
